# EUROPÄISCHE PATENTSCHRIFT

(11) **EP 0 577 129 B1**
(45) Veröffentlichungstag und Bekanntmachung des Hinweises auf die Patenterteilung: **11.10.1995**
(21) Anmeldenummer: 93110540.7
(22) Anmeldetag: 01.07.1993
(51) Int. Cl.: B62M 25/04, F16C 1/16

(54) **Betätigungseinrichtung für eine Mehrgang-Fahrradnabe**
Operating mechanism for a multispeed bicycle kub
Dispositif de commande pour un changement de vitesse dans le noyau d'une bicyclette

(30) Priorität: 02.07.1992 DE 4221728
(43) Veröffentlichungstag der Anmeldung: 05.01.1994
(73) Patentinhaber: FICHTEL & SACHS AG, D-97424 Schweinfurt (DE)
(72) Erfinder: Nürnberger, Günter, D-8720 Schweinfurt (DE)
(74) Vertreter: Prechtel, Jörg, Dipl.-Phys. Dr.

(56) Entgegenhaltungen:
- EP-A- 0 350 791
- DE-A- 3 314 229
- GB-A- 424 814

## Beschreibung

Die Erfindung betrifft eine Betätigungseinrichtung für eine Mehrgang-Fahrradnabe mit einer zwei Nabenenden aufweisenden, eine Drehachse definierenden Nabenachse, eine an der Nabenachse drehbar gelagerte Nabenhülse, einem zwischen mehreren Gängen umschaltbaren Getriebe innerhalb der Nabenhülse, wenigstens einem Antriebsrad in Antriebsverbindung mit einem Eingangselement des Getriebes, wenigstens einem Ausgangselement des Getriebes, welches mit der Nabenhülse in Antriebsverbindung steht, einer in der Nabenachse vorgesehenen, sich längs der Drehachse erstreckenden Bohrung, die zwei längliche, zur Drehachse parallel verlaufende, drucksteife Gangwechsel-Elemente aufnimmt, wobei innere Enden der Gangwechsel-Elemente an das Getriebe zum Umschalten zwischen den Gängen angekoppelt sind und äußere Ende der Gangwechsel-Elemente sich bis in den Bereich einer der beiden Nabenenden erstrecken.

Die Betätigungseinrichtung ist an dem einen Nabenende angebracht. Sie ist über ein Kraftübertragungsglied mit einer Gang-Auswahleinrichtung verbunden, die manuell betätigbar sein kann, und die hierzu häufig im Bereich des Fahrradlenkers angebracht ist. Das Kraftübertragungsglied umfaßt beispielsweise eine zug- und drucksteifes Kabel, welches innerhalb einer sich zwischen Betätigungseinrichtung und Gang-Auswahleinrichtung erstreckenden flexiblen Hülse geführt ist. Um den Überstand der seitlich am Fahrrad angebrachten Betätigungseinrichtung, d.h. die Länge der Betätigungseinrichtung parallel zur Drehachse der Nabe, gering zu halten, wird das Kraftübertragungsglied in der Regel in Richtung quer zur Drehachse von der Betätigungseinrichtung weg geführt. Aus der hieraus resultierenden Kraftumlenkung kann die Betätigungseinrichtung auch als Umlenkeinrichtung bezeichnet werden.

Bei den hier interessierenden Mehrgangnaben (in der Regel mehr als 3 Gänge, beispielsweise 5 oder 7 Gänge) kommt der Betätigungseinrichtung jedoch noch eine weitere Funktion zu. Für die Umschaltung zwischen den einzelnen Gängen, insbesondere bei Einsatz eines Planetengetriebes, werden nämlich die eingangs erwähnten zwei Gangswechsel-Elemente benötigt. Eines der beiden Gangwechsel-Elemente dient beispielsweise der Umschaltung zwischen den Stufen eines mehrstufigen Planetengetriebes. Das andere Gangwechsel-Element dagegen ermöglicht beispielsweise das Umschalten zwischen einem das Planetengetriebe umgehenden direkten Gang und Berggängen mit Krafteinleitung vom Antriebsrad aus in das Hohlrad des Planetengetriebes sowie Schnellgängen mit Krafteinleitung vom Antriebszahnrad aus auf den Planetenradträger des Planetengetriebes. Zur Betätigung dieser beiden Gangwechselemente unabhängig voneinander sind an sich auch zwei Kraftübertragungsglieder erforderlich, die dementsprechend zu zwei Gangsauswahl-Einrichtungen oder zu einer einzigen kombinierten Gangauswahl-Einrichtung führen. Diese beiden Kraftübertragungsglieder werden bei herkömmlichen Systemen jeweils aus einem der beiden Nabenenden herausgeführt. Dies ergibt jedoch einen hohen Bauaufwand und Montage- bzw. Demontageaufwand.

Die Erfindung befaßt sich mit einer an einem der beiden Nabenenden angebrachten Betätigungseinrichtung, die mit lediglich einem einzigen Kraftübertragungsglied auskommt. Hierzu wird in der Betätigungseinrichtung aus der Linearbewegung des einen Kraftübertragungsglieds zwischen den den Einzelgängen entsprechenden verschiedenen Schaltstufen sowohl eine Schaltbewegung für das eine Gangwechsel-Element als auch für das andere Gangwechsel-Element abgeleitet.

Aus der US-PS 4 947 703 (entsprechende EP 0 350 791 A2) ist eine Betätigungseinrichtung der eingangs genannten Art bekannt, bei der in einem am einen Nabenende angebrachten, im wesentlichen U-förmigen Gehäuse zwei sektorförmige Kurvenscheiben schwenkbar gelagert sind, an die über ein starres, U-förmiges Verbindungsteil das Kraftübertragungsglied zur entsprechenden Betätigung unmittelbar angreift. Die beiden Schwenkhebel sind mit einem ihrer beiden Enden an einer gemeinsamen Lagerstelle am Gehäuse gelagert und greifen mit ihren anderen beiden Enden jeweils an eines der beiden Gangwechsel-Elemente an. Von den beiden Gangwechsel-Elementen ist eines hülsenförmig, wohingegen das andere als innerhalb der Hülse geführter Stab ausgebildet ist. Das an die Hülse angreifende Ende des entsprechenden Schwenkhebels weist daher eine dementsprechende Gabelform auf. Zwischen ihren beiden Enden liegen die beiden Schwenkhebel jeweils an der entsprechenden Kurvenscheibe an, um bei einer Verschwenkung der Kurvenscheiben aufgrund entsprechender Betätigung der Gang-Auswahleinrichtung das jeweilige Gangwechsel-Element mehr oder weniger weit in die Nabenachse hineinzudrücken. Die beiden Kurvenscheiben samt ihrer gemeinsamen Schwenkachse liegen auf der von der Fahrradnabe abgewandten Seite der Schwenkhebel. Es ergibt sich eine wenig kompakte Bauform mit relativ großer axialer Länge (d.h. Länge in Richtung der Drehachse der Nabe). Die Mechanik ist nicht sehr robust, insbesondere aufgrund des Einsatzes von Röhrchen und Stängchen für die Gangwechsel-Elemente mit dementsprechender komplizierter Gestaltung der Enden der beiden Schwenkhebel, so daß Störungen bei rauhem Alltagsbetrieb möglich sind.

In der älteren US-Anmeldung, Serial-No. 08/063.930 (entsprechend der älteren europäischen Anmeldung
EP 93 108 190.5) ist eine ähnliche Betätigungseinrichtung angegeben, bei der jedoch anstelle der Bewegungssteuerung der beiden Schwenkhebel über zwei Kurvenscheiben eine Steuerung über ein linear bewegliches Steuerteil erfolgt, welches zwei Steuerkurven aufweist. Jede Steuerkurve wird von einem Abtastvorsprung im Bereich der Längenmitte des jeweiligen Schwenkhebels abgetastet. Das Steuerteil ist unmittelbar am Ende des Kraftübertragungsglieds auf der von der Fahrradnabe abgewandten Seite der Schwenkhebel angebracht, um vom Kraftübertragungsglied zum Wechseln der Gänge hin- und herverschoben zu werden. Auch hier ergibt sich eine relativ wenig kompakte Bauform mit relativ großer axialer Länge.

Der Erfindung liegt das Problem zugrunde, eine Betätigungseinrichtung für Mehrgang-Fahrradnaben der eingangs genannten Art bereitzustellen, die bei zuverlässiger Funktion eine kompakte Bauform aufweist.

Dieses Problem wird erfindungsgemäß durch eine Betätigungseinrichtung gelöst, die folgende Elemente aufweist:
ein an dem einen Nabenende anbringbares Gehäuse,
eine erste Kurvenscheibe, eine zweite Kurvenscheibe sowie ein Ritzel, die miteinander drehfest verbunden sind, und die ein Schwenkelement bilden, das im Gehäuse um eine Schwenkachse verschwenkbar gelagert ist,
ein längliches Zahnstangenelement mit einer Längsachse, welches im Gehäuse parallel zur Längsachse beweglich gelagert ist, mit einer Gang-Auswahleinrichtung über ein Kraftübertragungsglied verbindbar ist und eine sich parallel zur Längsachse erstreckende, in eine Verzahnung des Ritzels eingreifende Längsverzahnung aufweist,
einen ersten und einen zweiten Schwenkhebel, die im Gehäuse schwenkbar gelagert sind, wobei der erste Schwenkhebel ständig an der ersten Kurvenscheibe und der zweite Schwenkhebel ständig an der zweiten Kurvenscheibe anliegt, um jeweils eine durch die Form der jeweiligen Kurvenscheibe definierte Schwenkbewegung durchzuführen, und wobei der erste Schwenkhebel an eines der beiden Gang-Wechselelemente und der zweite Schwenkhebel an das andere Gang-Wechselelement angreift zur dementsprechenden Bewegung des jeweiligen Gang-Wechselelements parallel zur Drehachse.

Die Bewegungssteuerung der beiden Kurvenscheiben erfolgt also nicht mehr direkt über das Kraftübertragungsglied, sondern über einen zwischengeschalteten Zahnstangen-Ritzelantrieb.

Dieser kann an eine geeignete Stelle gelegt werden, so daß sich eine geringe axiale Baulänge der Betätigungseinrichtung ergibt. Der Zahnstangen-Ritzelantrieb kann ohne weiteres in ein nach außen hin geschlossenes Gehäuse integriert werden. Der Zahnstangen-Ritzelantrieb ist zuverlässig. Auch kann das Übersetzungsverhältnis durch entsprechende Auswahl der Zähnezahl des Ritzels an die jeweiligen Bedingungen angepaßt werden, wobei das übertragene Drehmoment von der jeweiligen Längsposition des Kraftübertragungsglieds unabhängig ist - dies im Gegensatz zur Anordnung gemäß der eingangs genannten US-PS 4 947 703. Erfindungsgemäß werden die Vorteile einer Drehkulissensteuerung mit dem eines Zahnstangenantriebs verbunden.

In einer besonders vorteilhaften Weiterbildung der Erfindung ist eine im Gehäuse angeordnete, mit dem Schwenkelement zusammenwirkende Rasteinrichtung vorgesehen, die mehrere, jeweils einem Gang des umschaltbaren Getriebes entsprechende Raststellungen des Schwenkelements festlegt. Diese Indexierung sorgt für eine exakte Umschaltung zwischen den Gängen, die unabhängig ist von Spiel oder Dejustierungen im Bereich der Gangauswahl-Einrichtung und des Kraftübertragungsglieds. Dennoch sind die einzelnen Gänge für die die Gangsauswahl-Einrichtung betätigende Person fühlbar, was die Bedienung sehr erleichtert.

Für besonders zuverlässige Rastfunktion bei kompakter Bauform wird in einer Weiterbildung der Erfindung dadurch gesorgt, daß die Rasteinrichtung ein im Gehäuse zwischen einer Eingriffsposition und einer Außereingriffsposition beweglich gelagertes und in die Eingriffsposition mittels eines Federelements vorgespanntes Rastvorsprungselement umfaßt, das in eine am Zahnstangenelement vorgesehene Rastkurve eingreift, wobei die Rastkurve mehrere, je einem Gang zugeordnete, in Richtung der Längsachse aufeinanderfolgende Rastausnehmungen aufweist. Die Rasteinrichtung könnte zwar auch an eine am Schwenkelement vorgesehene Umfangs-Rastkurve angreifen; in diesem Falle müßte jedoch das Schwenkelement einen weiteren Axialabschnitt aufweisen zusätzlich zu den beiden Kurvenscheiben und dem Ritzel. Dies würde einer kompakten Bauform widersprechen.

Um bei einfacher Montage und Demontage für zuverlässige Dauerfunktion zu sorgen, wird vorgeschlagen, daß das Gehäuse zwei miteinander verbundene Gehäuseteile aufweist, welche ein im wesentlichen geschlossenes Gehäuse bilden. Das geschlossene Gehäuse verhindert das Eindringen von Schmutz, Feuchtigkeit oder dergleichen.

Hierbei kann vorgesehen sein, daß wenigstens eines der Gehäuseteile mit Mitteln zur Halterung wenigstens eines der Teile Schwenkelement, erster Schwenkhebel, zweiter Schwenkhebel, Zahnstangenelement versehen ist. Diese Maßnahme vereinfacht den Zusammenbau, daß eine Vormontage möglich ist. Hierzu wird das entsprechende Teil (Schwenkelement, Schwenkhebel, Zahnstangenelement) in der für dieses Teil vorgesehenen Lage in das jeweilige Gehäuseteil eingelegt. Anschließend werden beide Gehäuseteile zusammenmontiert.

Bei den Gehäuseteilen kann es sich um Gehäusehälften handeln.

Eine besonders vorteilhafte Ausgestaltung der Erfindung ist dadurch gekennzeichnet, daß im Gehäuse eine mit dem Schwenkelement zusammenwirkende, jedoch nur bei einem Teil der Gänge wirksame Rückfeder-Einrichtung vorgesehen ist, die bei diesem Teil der Gänge den Gangwechsel in einer vorgegebenen Gangwechselrichtung unterstützt. Die Rückfedereinrichtung führt dazu, daß sämtliche Schaltvorgänge, für die von der Betätigungseinrichtung aus entsprechende Kräfte in die Gangwechsel-Elemente aufgewandt werden müssen, durch Belastung des Kraftübertragungsglieds in einer vorgegebenen Richtung, insbesondere in Zugrichtung, ausgelöst werden. Mit anderen Worten, alle kräfteverursachenden Schaltwege werden in die Zugstufe des Kraftübertragungsglieds verlegt. Ein hauptsächlich auf Zug beanspruchtes Kraftübertragungsglied (insbesondere Zugkabel) ist wesentlich einfacher aufgebaut und einfacher zu handhaben, als ein in zwei Richtungen kraftübertragendes Kraftübertragungsglied. Bei einer 7-Gang-Nabe mit dreistufigem Planetengetriebe, mit den Gängen 1 bis 3 als Berggängen, dem Gang 4 als Direktgang und den Gängen 5 bis 7 als Schnellgängen, muß der die Umschaltung zwischen den Planetenradstufen bewirkende Schwenkhebel beim Übergang vom 7. zum 6. und vom 6. zum 5. Gang zunehmend in Richtung zur Nabenachse hin verschwenkt werden, und zwar entgegen der Kraft einer Vorspannfeder innerhalb der Fahrradnabe. Entspricht dem 7. Gang beispielsweise die Stellung des Zahnstangenelements mit am weitesten aus dem Gehäuse herausgezogenen Kraftübertragungsglied, so müßte zur Durchführung der Gangwechselbewegung vom 7. auf den 6. Gang und vom 6. auf den 5. Gang eine entsprechende Druckkraft vom Kraftübertragungsglied auf das Zahnstangenelement ausgeübt werden. Aufgrund der erfindungsgemäßen Rückfedereinrichtung ist diese Druckkraft nicht erforderlich, da die Rückbewegung des Zahnstangenelements durch die Rückfedereinrichtungt unterstützt wird.

Einfacher zuverlässiger Aufbau der Rückfedereinrichtung ist dadurch gewährleistet, daß die Rückfedereinrichtung eine im Gehäuse gelagerte längliche Feder umfaßt, die sich mit einem ihrer beiden Enden an einem der beiden Gehäuseteile abstützt und an deren anderes Ende das Zahnstangenelement andrückt, wenn es sich in Positionen befindet, die jeweils einem Gang aus dem Teil der Gänge entspricht. Hierzu trägt auch bei, daß sich das andere Ende der Feder an einem eine Aussparung aufweisenden Halteelement abstützt, und daß das Zahnstangenelement einen Mitnahmevorsprung aufweist, der durch die Aussparung hindurch bewegbar ist zur Mitnahme des anderen Endes der Feder.

Gemäß einer besonders bevorzugten Ausgestaltung der Erfindung ist vorgesehen, daß der erste und der zweite Schwenkhebel als Doppelarmhebel ausgebildet sind jeweils mit einem Kurvenscheiben-Abtastende und einem an das jeweilige Gangwechsel-Element angreifenden Betätigungsende. Auf diese Weise können die Kurvenscheiben auf der der Fahrradnabe zugewandten Seite der Schwenkhebel angeordnet sein, was zusätzlich zur Reduzierung der axialen Baulänge der Betätigungseinrichtung beiträgt.

Um die Robustheit der Kombination von Betätigungseinrichtung und Mehrgang-Fahrradnabe zu erhöhen, wird vorgeschlagen, daß die beiden Gangwechselelemente von in der Bohrung parallel zur Drehachse verlaufenden und quer zur Drehachse nebeneinanderliegenden Druckstangen gebildet sind. Damit die erfindungsgemäßen Druckstangen auch bei relativ geringem Durchmesser der Nabenbohrung mechanisch ausreichend stabil sind, wird vorgeschlagen, daß die Druckstangen angenähert halbkreisförmigen Querschnitt aufweisen mit einander zugewandten Halbkreisdurchmessern. Um hier die Reibungsverluste möglichst gering zu halten, wird vorgeschlagen, daß die beiden Druckstangen mit parallel zur Drehachse verlaufenden Vorsprünge aneinander anliegen.

Hierbei wird vorgeschlagen, daß eine der beiden Druckstangen länger ausgebildet ist als die andere und sich weiter in die Nabenachse hinein erstreckt als die andere Druckstange, und daß diese Druckstange innerhalb der Nabenachse gegen Verdrehung gesichert ist. Die längere Druckstange sorgt aufgrund ihrer Anlage an der kürzeren Druckstange dafür, daß auch die kürzere Druckstange stets die vorgeschriebene Orientierung beibehält. Die Schwenkhebel müssen daher nicht zur Beibehaltung der Orientierung der Druckstangen beitragen, so daß ihre an den Druckstangen anliegenden Enden besonders einfach geformt sein können, insbesondere in Form abgerundeter Finger.

Die Erfindung betrifft schließlich eine Mehrgang-Fahrradschaltung, umfassend eine Mehrgang-Fahrradnabe mit einer Betätigungseinrichtung nach einem der vorhergehenden Ansprüche, eine Gang-Auswahleinrichtung sowie ein die Betätigungseinrichtung mit der Gang-Auswahleinrichtung verbindendes Kraftübertragungsglied.

Die Erfindung wird nachfolgend an einem Ausführungsbeispiel anhand der Zeichnung erläutert. Es zeigt:
- Fig. 1: eine Betätigungseinrichtung als Getriebeeinheit mit wesentlichen Funktionsteilen im Schnitt nach Linie I-I in Fig. 2;
- Fig. 2: einen Längsschnitt der Betätigungseinrichtung gemäß Fig. 1 mit Darstellung des Schwenkelements mit Zahnrad und Kurvenscheiben im Schnitt nach Linie II-II in Fig. 1;
- Fig. 3: einen Schnitt nach Linie III-III in den Figuren 1 und 2;
- Fig. 4: eine erste Kurvenscheibe mit erstem Schwenkhebel mit den zugeordneten möglichen Schaltstufen;
- Fig. 5: eine zweite Kurvenscheibe mit einem zweiten Schwenkhebel mit den zugeordneten möglichen Schaltstufen;
- Fig. 6: einen Axialschnitt durch den Bereich eines Nabenendes der Mehrgang-Fahrradnabe mit zwei Druckstangen in der Nabenbohrung;
- Fig. 7: einen Querschnitt beider Druckstangen gemäß Fig. 6;
- Fig. 8: eine vergrößerte Darstellung des Schnitts gemäß Fig. 7 mit angedeuteten ersten und zweiten Schwenkhebeln; und
- Fig. 9: eine grob schematische Gesamtansicht einer mit der Betätigungseinrichtung versehenen Mehrgang-Fahrradnabe samt Kraftübertragungsglied und Gang-Auswahleinrichtung.

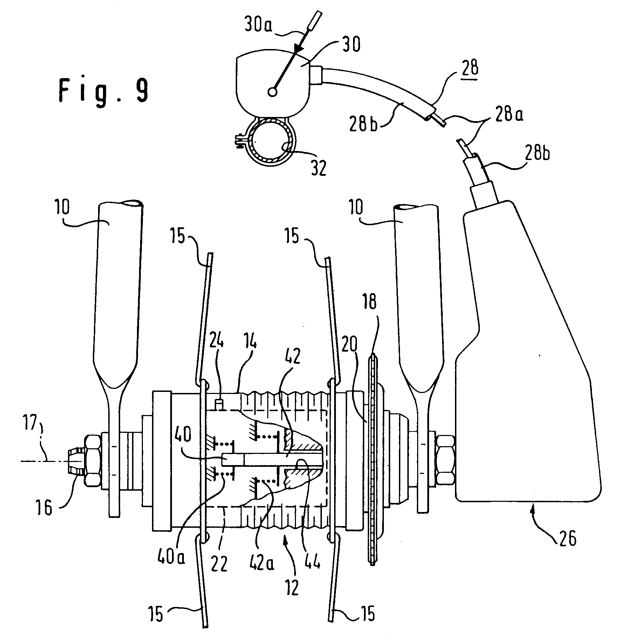

Fig. 9 zeigt den rückwärtigen Teil eines Fahrradrahmens 10, an welchem eine Mehrgang-Fahrradnabe 12 befestigt ist. Diese umfaßt eine Nabenhülse 14, die auf einer Nabenachse 16 drehbar gelagert ist. Die Nabenachse 16 definiert so eine Drehachse 17, um die sich die Nabenhülse 14 dreht und damit auch eine nicht dargestellte Hinterradfelge, die mit der Nabenhülse 14 über Speichen 15 verbunden ist. Ein Kettenrad 18 ist an der Nabenachse 16 drehbar gelagert und mit einem Antriebselement 20 verbunden. Das Antriebselement 20 bildet das Eingangselement eines Getriebes 22, welches innerhalb der Nabenhülse 14 angeordnet ist und welches zwischen mehreren Gängen umschaltbar ist. Eine symbolisch angedeutete, mit 24 bezeichnete Überholkupplung bildet das Ausgangselement des Getriebes 22 und treibt die Nabenhülse 14 an. Eine Betätigungseinheit 26 ist an einem der beiden Enden der Nabenachse 16 angebracht und über ein Kraftübertragungsglied in Form ein Bowdenkabels 28 mit einer Gang-Auswahleinrichtung 30 verbunden. Die Einrichtung 30 ist beispielsweise an einem Lenkerrohr 32 des jeweiligen Fahrrads befestigt. Die Gang-Auswahleinrichtung 30 weist einen manuell betätigbaren Gang-Schalthebel 30a auf. Dieser wirkt auf einen Bowdendraht 28a innerhalb einer Bowdenhülse 28b, die beide das erwähnte Bowdenkabel 28 bilden.

Die Betätigungseinrichtung 26, die auch als Umlenkeinrichtung bezeichnet werden kann, dient der Umsetzung der Schaltbewegung des Bowdendrahts 28a in Schaltbewegungen zweier Gangwechsel-Elemente innerhalb der Fahrradnabe 12. Diese Gangwechsel-Elemente werden von zwei Druckstangen 40,42 gebildet, die sich parallel zur Drehachse 17 innerhalb einer Bohrung 44 der Nabenachse 16 erstrecken.

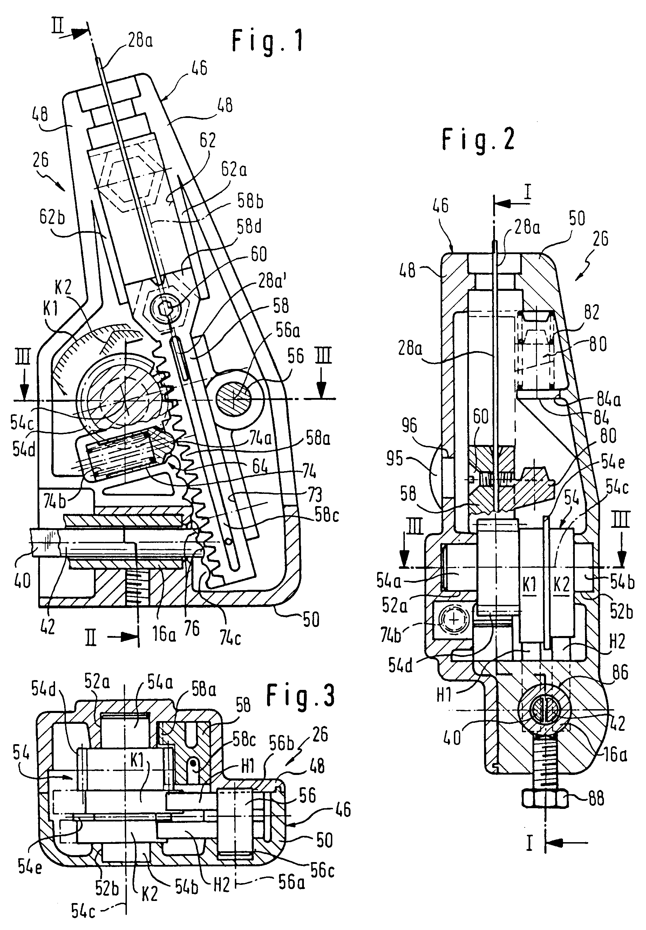

Die Betätigungseinrichtung 26 weist ein Gehäuse 46 auf aus zwei Gehäusehälften 48 und 50, die die Funktionsteile der Betätigungseinrichtung nach außen hin abdichtend umschließen. Beide Gehäusehälften 48,50 weisen Lagerstellen 52a und 52b, in denen Achsstummel 54a,54b eines Schwenkelements 54 drehbar gelagert sind. Das Schwenkelement 54 definiert eine Schwenkachse 54c. Das Schwenkelement 54 weist in Fig. 2 von links nach rechts der Reihe nach den Achsstummel 54a, ein Ritzel 54d, eine erste Kurvenscheibe K1, einen schmalen, radial vorstehenden Trennsteg 54e, eine zweite Kurvenscheibe K2 sowie den Achsstummel 54b auf.

Die erste Kurvenscheibe K1 wirkt mit einem ersten Schwenkhebel H1 zusammen. Die zweite Kurvenscheibe K2 wirkt mit einem zweiten Schwenkhebel H2 zusammen. Beide Schwenkhebel sind auf einem gemeinsamen Schwenkbolzen 56 gelagert, der eine Schwenkhebelachse 56a definiert. Der Schwenkbolzen 56 kann gemäß den Fig. 1 und 3 mit seinen beiden Enden in entsprechenden Lagerausnehmungen 56b und 56c in der Gehäusehälfte 48 bzw. der Gehäusehälfte 50 eingesetzt sein, zur beidendigen Lagerung. Gegebenenfalls kann es auch genügen, den Schwenkbolzen 56 lediglich in einer der beiden Gehäusehälften 48,50 zu lagern.

Mit der Außenumfangsverzahnung des Ritzels 54d wirkt eine Längsverzahnung 58a zusammen, die an einem länglichen Zahnstangenelement 58 sich in dessen Längsrichtung 58b erstreckkend angeordnet ist.

Das Zahnstangenelement 58 ist am Bowdendraht 28a mittels einer Befestigungsschraube 60 angebracht. Um für ein großes Justier-Spiel zu sorgen, ist das schieberartige Zahnstangenelement 58 mit einer parallel zur Längsachse 58b verlaufenden, sich im wesentlichen über die gesamte Länge des Zahnstangenelements 58 erstreckenden Aufnahme 58c versehen zur Aufnahme des sich an die Befestigungsschraube am in Fig. 1 oberen Ende des Zahnstangenelements 58 nach unten folgenden freien Endabschnitts 28a' des Bowdendrahts 28a.

Das die Befestigungsschraube 60 aufnehmende obere Ende des Zahnstangenelements 58 bildet einen Zahnstangenelement-Kopf 58d. Dieser ist in der Gehäusehälfte 48 in einer doppelten Führung 62 geführt aus zwei einander gegenüberliegenden Führungsrippen 62a und 62b. An den Kopf 58d anschließend wird das Zahnstangenelement 58 durch eine einfache Gleitführung 73 geführt, die im wesentlichen von einer Gehäusewand auf der dem Ritzel 54d gegenüberliegenden Seite des Zahnstangenelements 58 gebildet wird. Diese Führung 73 nimmt diejenigen Kräfte auf, die beim gegenseitigen Zahneingriff von Längsverzahnung 58a und Ritzel 54d hervorgerufen werden.

Ferner werden durch die Führung 73 Kräfte aufgenomen, die von einer allgemein mit 64 bezeichneten Rasteinrichtung hervorgerufen werden. Diese Rasteinrichtung wird von einem Rastvorsprungselement in Form eines Raststiftes 74 gebildet, dessen Kopf 74a von einer Schraubendruckfeder 74b in Eingriff in eine Rastkurve 74c gedrückt wird. Die Rastkurve 74c besteht aus mehreren, je einem Gang des Getriebes der Fahrradnabe 12 zugeordneten Rastausnehmungen 76, die parallel zur Längsachse 58b aufeinanderfolgend am Zahnstangenelement 58 angeordnet sind. Der Raststift 74 befindet sich auf der gleichen Seite des Zahnstangenelements 58 wie das Ritzel 54d.

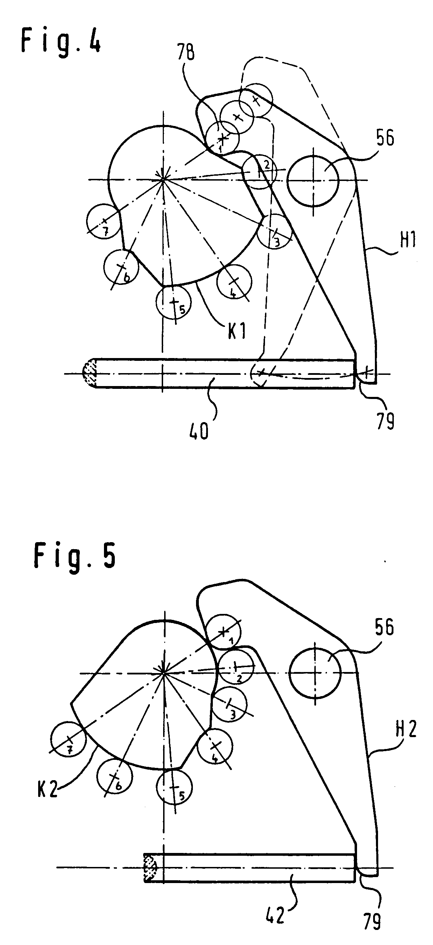

Bei einer Linearverschiebung des Bowdendrahts 28a in der einen oder anderen Richtung, aufgrund entsprechender Betätigung der Gangauswahl-Einrichtung 30, verdreht das dementsprechend in Längsrichtung 58b schrittweise (entsprechend dem Abstand der Rastausnehmungen 76) bewegte Zahnstangenelement 58 über das Ritzel 54d die erste und zweite Kurvenscheibe K1 und K2. Der an der ersten Kurvenscheibe K1 anliegende erste Schwenkhebel H1 liegt mit seinem in den Fig. 1,2 und 4 oberen Ende an der ersten Kurvenscheibe K1 an, und zwar entweder unmittelbar oder, wie in Fig. 4 angedeutet ist, über eine Abtastrolle 78. Demzufolge verschwenkt der Schwenkhebel H1 entsprechend der Umrißform der Kurvenscheibe K1, um in der Folge mit seinem in den Fig. 1,2 und 4 unteren Ende über eine dort ausgebildete abgerundete Nase 79 die Druckstange 40 zu verschieben. Der demzufolge als Doppelarmhebel ausgebildete Schwenkhebel H1 dreht sich dabei um den bereits erwähnten Lagerbolzen 56. Da die Druckstange 40, ebenso wie die andere Druckstange 42, zumindest dann unter einer Druck-Vorspannung steht, wenn sie aus derjenigen Gangstellung in die Mehrgangnabe 12 hinein verschoben wird, in der die Schaltstange am weitesten aus der Nabenachse 16 herausragt (Gänge 1 und 7 in Fig. 4 bzw. Gang 1 in Fig. 5), bleibt der Schwenkhebel H1 wie auch der Schwenkhebel H2 in allen Gängen stets in Kontakt sowohl mit der Umfangskurve (= Schaltkurve) der jeweiligen Kurvenscheibe K1 bzw. K2, als auch mit dem äußeren Ende der jeweiligen Druckstange 40 bzw. 42. In Fig. 9 sind dementsprechende Druckfedern 40a und 42a angedeutet, die zwischen dem jeweiligen inneren Ende der Druckstange 40 bzw. der Druckstange 42 und der Nabenachse 16 wirken.

Die beiden jeweils für sich kurvengesteuerten Druckstangen 40 und 42 sind erforderlich, um das Getriebe 22 zu schalten, insbesondere dann, wenn das Getriebe fünf und mehr Gänge aufweist. Das Getriebe 22 ist in diesem Falle insbesondere als mehrstufiges Planetengetriebe ausgebildet. Die Umschaltung von einer Planetenstufe auf die andere erfolgt dann über die Kurvenscheibe K1, den Schwenkhebel H1 und die Druckstange 40. Die Umschaltung zwischen Krafteinleitung in das Hohlrad des Planetengetriebes (Berggänge 1 bis 3) auf den direkten Gang (4. Gang) und von diesem auf Krafteinleitung in den Planetenradträger (Schnellgänge 5 bis 7) erfolgt über die Kurvenscheibe K2, den Schwenkhebel H2 und die Druckstange 42.

Am Kopf 58d des Zahnstangenelements 58 ist ein Mitnahmevorsprung in Form eines Auslegers 80 angeordnet, der in eine an der Gehäusehälfte 50 angeordnete, vorgespannte Zusatzfeder 82 einfädelt und diese mitnimmt, wenn die in Zugrichtung des Bowdendrahts 28a beiden letzten Gänge (6. und 7. Gang gemäß Fig. 4 und 5) eingeschaltet werden. Der Ausleger 80 bildet somit zusammen mit der Zusatzfeder 82 eine Rückfedereinrichtung, die lediglich in den Gängen 6 und 7 wirkt.

Der Hintergrund für diese Vorkehrung ist der, daß Kraftübertragungsglieder, wie das bei dem hier beschriebenen Ausführungsbeispiel vorgesehene Bowdenkabel 28, im allgemeinen auf Zug stärker belastbar sind als auf Druck. Wenn die Kurvenscheibe K1, wie aus Fig. 4 ersichtlich, entgegen dem Uhrzeigersinn aus der Position des ersten Gangs herausgedreht wird, so bewegt der Schwenkhebel H1 seine Nase 79 nach links, bis sie mit Gangstufe 3 die gestrichelte Position erreicht hat. Diese Extremposition wird bis Gangstufe 5 beibehalten. Anschließend jedoch schwenkt der Schwenkhebel H1 zurück, bis er in der Gangstufe 7 seine Ursprungsposition gemäß dem ersten Gang erreicht hat. Dieser Um-schaltvorgang erfolgt während der Zugphase des Bowdendrahts 28a, wobei es unproblematisch ist, daß beim Übergang zum 6. und zum 7. Gang die einen Federspeicher darstellende, vorstehend beschriebene Rückfedereinrichtung aus Ausleger 80 und Feder 82 zunehmend gespannt wird.

Das Zurückschalten von der 7. in die 6. und von dieser in die 5. Gangstufe in der Druckphase des Bowdenkabels 28 bereitet keine Schwierigkeiten, obwohl ja der Schwenkhebel H1 hierbei im Uhrzeigersinn der Fig. 4 verschwenkt und die Gegenkraft der Druckfeder 40a gemäß Fig. 9 zu überwinden hat. Aufgrund der gespeicherten Zusatzkraft in der Zusatzfeder 82 wird nämlich die Schaltbewegung in den 6. Gang und den 5. Gang dementsprechend unterstützt. Spätestens beim Weiterschalten in den 4. Gang taucht der Ausleger 80 aus der Zusatzfeder 19 aus. Da während der weiteren Druckphase des Bowdenkabels 28 mit Übergang zu den Gängen 3, 2 und 1 beide Schwenkhebel H1 und H2 jeweils entgegen dem Uhrzeigersinn der Fig. 4 und 5 verschwenken, jeweils unterstützt durch die Druckfedern 40a und 42a, bereitet dieser Umschaltvorgang keine Schwierigkeiten. Besonders leicht läßt sich die Kurvenscheibe K1 von der Gangposition 3 in 2 und von der Position 2 in 1 verdrehen, da der Schaltvorgang nach dem Prinzip der schiefen Ebene durch die Kurvenscheibe K1 unter Einwirkung der Druckfeder 40a unterstützt wird. Bei der Kurvenscheibe K2 liegt die "schiefe Ebene" zwischen den Gangstufen 5, 4 und 3. Da der Schwenkhebel H2 zwischen den Gangstufen 5, 6 und 7 seine Extremposition beibehält, also keine gegenläufige Bewegung wie der Schwenkhebel H1 bei Durchschalten sämtlicher Gänge in einer Richtung durchführt, wird für die Kurvenscheibe K1 an sich kein Federspeicher benötigt. Hiervon abgesehen wirkt der beschriebene Federspeicher auf beide Kurvenscheiben K1 und K2, da er vom vorgeschalteten Zahnstangenelement 58 betätigt wird.

Zur Lagerung des in Fig. 2 unteren, dem Ausleger 80 zugewandten Endes der Zusatzfeder 82 (Schraubendruckfeder) sei angemerkt, daß sich dieses Ende an einem konsolenartigen Halteelement 84 abstützt, welches eine zentrale Aussparung 84a aufweist zum Durchtritt des Auslegers 80. Das obere Ende der Feder dagegen stützt sich unmittelbar an der Gehäusehälfte 50 ab.

Zur Montage der Betätigungseinrichtung 26 am in Fig. 9 rechten Ende der Nabenachse 16 ist die Gehäusehälfte 50 mit einer Bohrung 86 versehen, in die das rechte Ende 16a der Nabenachse 16 einsteckbar ist, mit anschließender Fixierung durch eine radial verlaufende Befestigungsschraube 88.

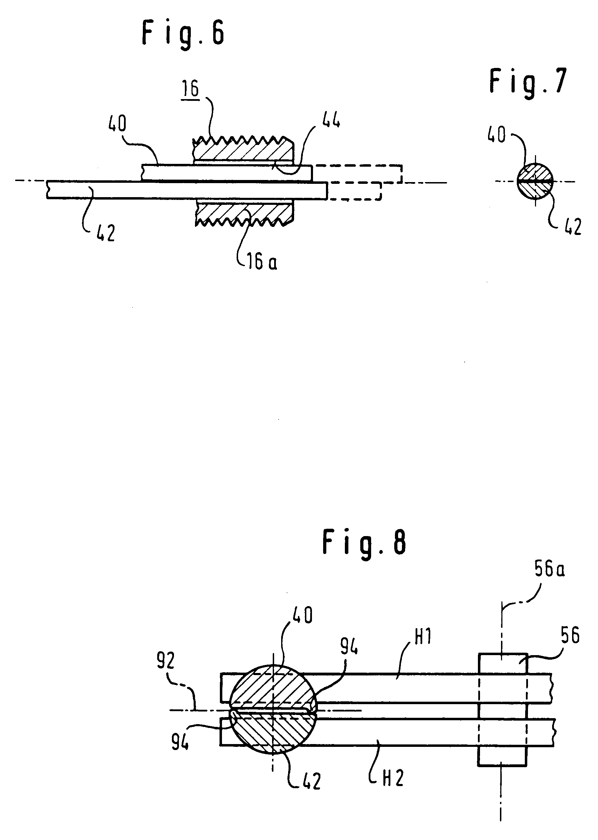

Die Einbaulage (Winkelorientierung in bezug auf die Drehachse 17) von Nabenachse und Betätigungseinrichtung 26) muß aufeinander abgestimmt sein, da die Druckstangen 40 und 42 in definierter Lage zu den Nasen 79 der Schwenkhebel H1 und H2 angeordnet sein müssen. Wie beispielsweise Fig. 8 zeigt, sind beide Druckstangen 40,42 im Querschnitt im wesentlichen halbkreisförmig mit gegenseitiger Anlage der beiden Halbkreisdurchmesser. Die Schwenkhebel H1 und H2 müssen also in einer zur Berührungsebene 92 beider Druckstangen 40,42 parallelen Ebene verschwenken, d.h. die Achse 56a muß senkrecht auf der Ebene 92 stehen. Um Schwenkhebel H1,H2 mit einfachen Nasen 79 einsetzen zu können, die nicht in der Lage sind, die erforderliche Druckstangen-Orientierung relativ zur Betätigungseinrichtung 26 sicherzustellen, wird diese Funktion von der Mehrgangnabe 12 selbst übernommen. Dies kann dadurch geschehen, daß die längere der beiden Druckstangen 40 und 42 im Inneren der Fahrradnabe 12 derart stabil gehalten wird, daß sich ihre Drehorientierung in bezug auf die Drehachse 17 nicht ändert. Die andere kürzere Druckstange 42 richtet sich dann aufgrund der gegenseitigen Anlage, geführt innerhalb der Bohrung 44, selbsttätig aus.

Um bei reduzierter Reibung für zuverlässige gegenseitige Anlage bei identischem Querschnitt zu sorgen, können beide Druckstangen 40,42 gemäß Fig. 8 jeweils mit einem Vorsprung 94 versehen sein, mit dem diese an der jeweils anderen Druckstange anliegen. Dieser im wesentlichen halbkreisförmige Vorsprung gemäß Fig. 8 befindet sich bei der Druckstange 42 im Bereich der linken Ecke zwischen dem Durchmesser und dem Halbkreisbogen. Der Vorsprung 94 der in Fig. 8 oberen Druckstange 40 befindet sich auf der diametral gegenüberliegenden Stelle. Man erhält im Ergebnis eine zweifache Linienberührung zwischen den beiden Druckstangen 40 und 42, die eine flächige, zu größeren Reibungswiderständen führende gegenseitige Berührung der Druckstangen verhindert.

Die beiden Gehäusehälften 48 und 50 werden miteinander staubdicht abschließend verbunden, nachdem vorher die inneren Funktionsteile gemäß vorstehender Beschreibung eingelegt worden sind. Eine Lifetime-Schmierung der beweglichen Teile garantiert gleichbleibend ordnungsgemäße Funktion auf lange Zeit. Die Gehäusehälften 48,50 werden vorzugsweise ultraschall-verschweißt. Sie können auch miteinander verschraubt oder vernietet werden, so daß das Gehäuse auch wieder zerlegt werden kann, was jedoch im allgemeinen nicht erforderlich ist.

Lediglich zur Einstellung der effektiven Länge des Bowdenkabels, d.h. der Ort der Befestigung des Zahnstangenelements 58 am Bowdendraht 28a ist ein Zugang in das Innere der Betätigungseinrichtung 26 erforderlich. Gemäß Fig. 2 ist hierzu eine Verschlußkappe 95 vorgesehen, die eine Zugangsöffnung 96 wahlweise verschließt. Die Zugangsöffnung 96 befindet sich im Bereich der Befestigungsschraube 60, wenn das Zahnstangenelement 58 in der Position der 7. Gangstufe steht. Mit Hilfe eines durch die Öffnung 96 gesteckten Schraubendrehers kann die Befestigungsschraube 60 momentan gelöst und der Bowdendraht 28a in die gewünschte Position geschoben werden, woraufhin dann die Befestigungsschraube 60 wieder festgedreht wird und die Verschlußkappe 95 nach Herausziehen des Schraubendrehers wieder aufgesteckt wird.

Die vorstehend beschriebene Betätigungseinrichtung 26 erlaubt die Steuerung der Schaltvorgänge innerhalb der Fahrradnabe 12 über zwei Schubstangen 40,42 mit Hilfe eines einzigen Betätigungszugs (Bowdendraht 28a). Die Rasteinrichtung 64 erlaubt eine korrekte Positionierung der Gänge. Die Betätigungseinrichtung 26 ist kompakt; insbesondere ihre axiale Länge (parallel zur Drehachse 17) ist vergleichsweise gering, so daß der seitliche Überstand der montierten Betätigungseinrichtung 26 über den Fahrradumriß hinaus relativ gering ist. Aufgrund des zweiteiligen geschlossenen Gehäuses ergibt sich ein geschlossenes System, welches bei Verwendung geeigneter Schmierstoffe für gleichbleibend gute Funktion sorgt. Ferner können mit Hilfe des Federspeichers (Ausleger 80, Zusatzfeder 82) bei Push-Pull-Bedienung Bewegungsabläufe von der Druckbewegungsphase des Kraftübertragungsglieds (Bowdenkabel 28) in die Zugbewegungsphase verlegt werden.

## Patentansprüche

1. Betätigungseinrichtung (26) für eine Mehrgang-Fahrradnabe (12) mit einer zwei Nabenenden aufweisenden, eine Drehachse (17) definierenden Nabenachse (16), einer an der Nabenachse (16) drehbar gelagerten Nabenhülse (14), einem zwischen mehreren Gängen umschaltbaren Getriebe (22) innerhalb der Nabenhülse (14), wenigstens einem Antriebsrad (18) in Antriebsverbindung mit einem Eingangselement (20) des Getriebes (22), wenigstens einem Ausgangselement (24) des Getriebes (22), welches mit der Nabenhülse (14) in Antriebsverbindung steht, einer in der Nabenachse (16) vorgesehenen, sich längs der Drehachse (17) erstreckenden Bohrung (44), die zwei längliche, zur Drehachse (17) parallel verlaufende, drucksteife Gangwechsel-Elemente (40,42) aufnimmt, wobei innere Enden der Gangwechsel-Elemente (40,42) an das Getriebe (22) zum Umschalten zwischen den Gängen angekoppelt sind und äußere Ende der Gangwechsel-Elemente (40,42) sich bis in den Bereich einer der beiden Nabenenden erstrecken, wobei die Betätigungseinrichtung folgende Elemente aufweist:
- ein an dem einen Nabenende (16a) anbringbares Gehäuse (46),
- eine erste Kurvenscheibe (K1), eine zweite Kurvenscheibe (K2) sowie ein Ritzel (54d), die miteinander drehfest verbunden sind, und die ein Schwenkelement (54) bilden, das im Gehäuse (46) um eine Schwenkachse (54c) verschwenkbar gelagert ist,
- ein längliches Zahnstangenelement (58) mit einer Längsachse (58b), welches im Gehäuse parallel zur Längsachse (58b) beweglich gelagert ist, mit einer Gang-Auswahleinrichtung (30) über ein Kraftübertragungsglied (28) verbindbar ist und eine sich parallel zur Längsachse (58b) erstreckende, in eine Verzahnung des Ritzels (54d) eingreifende Längsverzahnung (58a) aufweist,
- einen ersten und einen zweiten Schwenkhebel (H1,H2), die im Gehäuse (46) schwenkbar gelagert sind, wobei der erste Schwenkhebel (H1) ständig an der ersten Kurvenscheibe (K1) und der zweite Schwenkhebel (H2) ständig an der zweiten Kurvenscheibe (K2) anliegt, um jeweils eine durch die Form der jeweiligen Kurvenscheibe (K1,K2) definierte Schwenkbewegung durchzuführen, und wobei der erste Schwenkhebel (H1) an eines der beiden Gang-Wechselelemente (40,42) und der zweite Schwenkhebel (H2) an das andere Gang-Wechselelement (40,42) angreift zur dementsprechenden Bewegung des jeweiligen Gang-Wechselelements (40,42) parallel zur Drehachse (17).

2. Betätigungseinrichtung nach Anspruch 1,
dadurch gekennzeichnet,
daß eine im Gehäuse (46) angeordnete, mit dem Schwenkelement (54) zusammenwirkende Rasteinrichtung (64) vorgesehen ist, die mehrere, jeweils einem Gang des umschaltbaren Getriebes (22) entsprechende Raststellungen des Schwenkelements (54) festlegt.

3. Betätigungseinrichtung nach Anspruch 2,
dadurch gekennzeichnet,
daß die Rasteinrichtung (64) ein im Gehäuse zwischen einer Eingriffsposition und einer Außereingriffsposition beweglich gelagertes und in die Eingriffsposition mittels eines Federelements (74b) vorgespanntes Rastvorsprungselement (74 ) umfaßt, das in eine am Zahnstangenelement (58) vorgesehene Rastkurve (74c) eingreift, wobei die Rastkurve (74c) mehrere, je einem Gang zugeordnete, in Richtung der Längsachse (58b) aufeinanderfolgende Rastausnehmungen (76) aufweist.

4. Betätigungseinrichtung nach Anspruch 1,
dadurch gekennzeichnet,
daß das Gehäuse (46) zwei miteinander verbundene Gehäuseteile (48,50) aufweist, welche ein im wesentlichen geschlossenes Gehäuse bilden.

5. Betätigungseinrichtung nach Anspruch 4,
dadurch gekennzeichnet,
dadurch gekennzeichnet, daß wenigstens eines der Gehäuseteile (48,50) mit Mitteln zur Halterung wenigstens eines der Teile Schwenkelement (54), erster Schwenkhebel (H1), zweiter Schwenkhebel (H2), Zahnstangenelement (58) versehen ist.

6. Betätigungseinrichtung nach Anspruch 4 oder 5,
dadurch gekennzeichnet,
daß die beiden Gehäuseteile jeweils eine Gehäusehälfte (48,50) bilden.

7. Betätigungseinrichtung nach einem der vorhergehenden Ansprüche,
dadurch gekennzeichnet,
daß die erste Kurvenscheibe (K1), die zweite Kurvenscheibe (K2) und das Ritzel (54d) auf einer gemeinsamen Welle drehfest angeordnet sind.

8. Betätigungseinrichtung nach einem der vorhergehenden Ansprüche,
dadurch gekennzeichnet,
daß das Zahnstangenelement (58) mit dem Kraftübertragungsglied (28) über eine in das Zahnstangenelement (58) eingesetzte Befestigungsschraube (60) verbunden ist, und daß das Zahnstangenelement (58) mit einer parallel zur Längsachse (58b) verlaufenden, sich im wesentlichen über die gesamte Länge des Zahnstangenelements (58) erstreckenden Ausnehmung (58c) zur Aufnahme eines sich an die Befestigungsschraube (60) anschließenden freien Endabschnitts (28a') des Kraftübertragungsglieds (28) versehen ist.

9. Betätigungseinrichtung nach Anspruch 8,
dadurch gekennzeichnet,
daß bei einer Ausbildung des Gehäuses aus zwei miteinander verbundenen Gehäuseteilen (48,50) eines der beiden Gehäuseteile (48,50) eine mit einem Verschlußelement (95) verschließbare Werkzeugzutrittsöffnung (96) im Bereich des Zahnstangenelements (58) aufweist, um mittels der Befestigungsschraube (60) eine wahlweise Einstellung der Befestigungsposition des Zahnstangenelements (58) am Kraftübertragungsglied (28) zu erlauben.

10. Betätigungseinrichtung nach einem der vorhergehenden Ansprüche,
dadurch gekennzeichnet,
daß im Gehäuse (46) eine mit dem Schwenkelement (54) zusammenwirkende, jedoch nur bei einem Teil (6. und 7. Gang) der Gänge wirksame Rückfeder-Einrichtung vorgesehen ist, die bei diesem Teil der Gänge den Gangwechsel in einer vorgegebenen Gangwechselrichtung unterstützt.

11. Betätigungseinrichtung nach Anspruch 10,
dadurch gekennzeichnet,
daß die Rückfedereinrichtung eine im Gehäuse (46) gelagerte längliche Feder (82) umfaßt, die sich mit einem ihrer beiden Enden an einem der beiden Gehäuseteile (48,50) abstützt und an deren anderes Ende das Zahnstangenelement (58) andrückt, wenn es sich in Positionen befindet, die jeweils einem Gang (6. und 7. Gang) aus dem Teil der Gänge entspricht.

12. Betätigungseinrichtung nach Anspruch 11,
dadurch gekennzeichnet,
daß sich das andere Ende der Feder (82) an einem eine Aussparung (84a) aufweisenden Halteelement (84) abstützt, und daß das Zahnstangenelement (58) einen Mitnahmevorsprung (80) aufweist, der durch die Aussparung (84a) hindurch bewegbar ist zur Mitnahme des anderen Endes der Feder (82).

13. Betätigungseinrichtung nach Anspruch 12,
dadurch gekennzeichnet,
daß dann, wenn das Kraftübertragungsglied (28a) zur Durchführung eines Gangwechsels zwischen Gängen aus dem Teil (6. und 7. Gang) der Gänge von der Gangauswahleinrichtung aus dem Gehäuse herausgezogen wird, ein Federelement (82) der Rückfedereinrichtung zunehmend komprimiert wird.

14. Betätigungseinrichtung nach einem der vorhergehenden Ansprüche,
gekennzeichnet durch
eine Gleitführung (73) im Gehäuse (46) für das Zahnstangenelement (58) auf der dem Rastvorsprungselement (74a) der Rasteinrichtung (64) gegenüberliegenden Seite des Zahnstangenelements (58).

15. Betätigungseinrichtung nach einem der vorhergehenden Ansprüche,
dadurch gekennzeichnet,
daß ein eine Befestigungsschraube (60) für das Kraftübertragungsglied (28) aufnehmender Kopf (58d) des Zahnstangenelements (58) in einer im Gehäuse ausgebildeten Führung (62) geführt ist.

16. Betätigungseinrichtung nach einem der vorhergehenden Ansprüche,
dadurch gekennzeichnet,
daß der erste und der zweite Schwenkhebel (H1,H2) im Gehäuse (46) auf einem gemeinsamen Schwenklagerbolzen (56) schwenkbar angeordnet sind.

17. Betätigungseinrichtung nach einem der vorhergehenden Ansprüche,
dadurch gekennzeichnet,
daß der erste und der zweite Schwenkhebel (H1,H2) als Doppelarmhebel ausgebildet sind jeweils mit einem KurvenscheibenAbtastende und einem an das jeweilige Gangwechsel-Element (40,42) angreifenden Betätigungsende.

18. Betätigungseinrichtung nach einem der vorhergehenden Ansprüche,
dadurch gekennzeichnet,
daß die beiden Gangwechsel-Elemente von in der Bohrung (44) parallel zur Drehachse (17) verlaufenden und quer zur Drehachse (17) nebeneinanderliegenden Druckstangen (40,42) gebildet sind.

19. Betätigungseinrichtung nach Anspruch 18,
dadurch gekennzeichnet,
daß die Druckstangen (40,42) angenähert halbkreisförmigen Querschnitt aufweisen mit einander zugewandten Halbkreisdurchmessern.

20. Betätigungseinrichtung nach Anspruch 19,
dadurch gekennzeichnet,
daß die beiden Druckstangen (40,42) mit parallel zur Drehachse (17) verlaufenden Vorsprünge (94) aneinander anliegen.

21. Betätigungseinrichtung nach Anspruch 20,
dadurch gekennzeichnet,
daß eine der beiden Druckstangen (40,42) einen Vorsprung (94) im Bereich der zwischen dem Halbkreisdurchmesser und dem Halbkreisumfang der Querschnittsform gebildeten Ecke aufweist, und daß die andere Druckstange diesem Vorsprung (94) diametral gegenüberliegend ebenfalls einen Vorsprung (94) im Bereich der Ecke zwischen dem Halbkreisdurchmesser und dem Halbkreisumfang der Querschnittsform aufweist.

22. Betätigungseinrichtung nach einem der Ansprüche 18 bis 21,
dadurch gekennzeichnet,
daß eine der beiden Druckstangen (40,42) länger ausgebildet ist als die andere und sich weiter in die Nabenachse (16) hinein erstreckt als die andere Druckstange, und daß diese Druckstange innerhalb der Nabenachse (16) gegen Verdrehung gesichert ist.

23. Mehrgang-Fahrradschaltung, umfassend eine Mehrgang-Fahrradnabe (12) mit einer Betätigungseinrichtung (26) nach einem der vorhergehenden Ansprüche, eine Gang-Auswahleinrichtung (30) sowie ein die Betätigungseinrichtung (26) mit der Gang-Auswahleinrichtung (30) verbindendes Kraftübertragungsglied.

## Claims

1. Actuating means (26) for a multispeed cycle hub (12) having a hub axle (16) with two hub ends defining an axis of rotation (17), a hub sleeve (14) rotatably mounted on the hub axle (16), a transmission (22) shiftable among several speeds inside of the hub sleeve (14), at least one drive gear (18) in drive connection with an input element (20) of the transmission (22), at least one output element (24) of the transmission (22) in drive connection with the hub sleeve (14), a bore (44) provided in the hub axle (16), extending along the axis of rotation (17), and accommodating two elongated compressionally rigid speed-change elements (40, 42) running parallel to the axis of rotation (17), inner ends of the speed-change elements (40, 42) being coupled to the transmission (22) for shifting between speeds and outer end of the speed change elements (40, 42) being extended into the region of one of the two hub ends, the said actuating means comprising the following elements:
- a housing (46) attachable to the one hub end (16a),
- a first cam (K1), a second cam (K2) and a pinion (54d) connected rotationally fixed to each other and forming a pivot element (54) mounted in the housing (46) pivotable about an axis (54c),
- an elongated rack element (58) with longitudinal axis (58b) mounted movable parallel to the longitudinal axis (58b) in the housing, connectable to a speed-selection means (30) by way of a force-transmission member (28) and comprising lengthways teeth (58a) extending parallel to the longitudinal axis (58b) and engaging teeth of the pinion (54d),
- a first and a second pivot lever (H1, H2) pivotably mounted in the housing (46), the first pivot lever (H1) in steady contact with the first cam (K1) and the second pivot lever (H2) in steady contact with the second cam (K2), in each instance in order to execute a pivoting motion defined by the shape of the cam (K1, K2) in question, the first pivot lever (H1) engaging one of the two speed-change elements (40, 42) and the second pivot lever (H2) engaging the other speed-change element (40, 42) for corresponding motion of the speed-change element (40, 42) in question parallel to the axis of rotation (17).

2. Actuating means according to claim 1,
characterised in that,
an arrest means (64) arranged in the housing (46) and cooperating with the pivot element (54) is provided, fixing several arrest settings of the pivot element (54) each corresponding to a speed of the shiftable transmission (22).

3. Actuating means according to claim 2,
characterised in that,
arrest means (64) comprises an arrest projection element (74) mounted in the housing movable between an engagement position and a disengagement position and prestressed into the engagement position by a spring element (74b) which means engages an arrest curve (74c) provided on the rack element (58), said arrest curve (74c) comprising several arrest openings (76) following one upon another in the direction of the longitudinal axis (58b) and each associated with a speed.

4. Actuating means according to claim 1,
characterised in that,
the housing (46) comprises two housing parts (48, 50) connected to each other and forming an essentially closed housing.

5. Actuating means according to claim 4,
characterised in that,
at least one of the housing parts (48, 50) is provided with means for suspension of at least one of the parts: pivot element (54), first pivot lever (H1), second pivot lever (H2), rack element (58).

6. Actuating means according to claim 4 or 5,
characterised in that,
each of the two housing parts constitutes a half-housing (48, 50).

7. Actuating means according to one of the preceding claims,
characterised in that,
the first cam (K1), the second cam (K2) and the pinion (54d) are arranged rotationally fixed on a common shaft.

8. Actuating means according to one of the preceding claims,
characterised in that,
the rack element (58) is connected to the force-transmission member (28) by way of a fastening screw (60) set into the rack element (58) and the rack element (58) is provided with an aperture (58c) extending parallel to the longitudinal axis (58b), running substantially throughout the length of the rack element (58), to receive a free end segment (28a') of the force-transmission member (28) adjacent to the fastening screw (60).

9. Actuating means according to claim 8,
characterised in that,
in the case of a housing configuration of two housing parts (48, 50) connected to each other, one of the two housing parts (48, 50) comprises a tool access opening (96) closable by means of a closure element (95) in the region of the rack element (58), in order by means of the fastening screw (60) to permit an elective adjustment of the fastening position of the rack element (58) on the force-transmission member (28).

10. Actuating means according to one of the preceding claims,
characterised in that,
a restoring spring means cooperating with the pivot element (54) but operative only with some of the speeds (6th and 7th speed) is provided in the housing (46), assisting change of speed in a pre-assigned shift direction in the case of those speeds.

11. Actuating means according to claim 10,
characterised in that,
the restoring spring means comprises an elongated spring (82) lodged in the housing (46), abutting by one of its two ends on one the two housing parts (48, 50) and pressing the rack element (58) into contact at its other end when in positions corresponding to some one of the said speeds (6th and 7th speed).

12. Actuating means according to claim 11,
characterised in that,
the other end of the spring (82) abuts on a holding element (84) having an aperture (84a) and the rack element (58) comprises a projection (80) movable through the aperture (84a) to carry along the other end of the spring (82).

13. Actuating means according to claim 12,
characterised in that,
when the force-transmission member (28a) is drawn out of the housing to execute a speed change between one and another of said speeds (6th and 7th speeds) by the speed selection means, a spring element (82) of the restoring spring means is increasingly compressed.

14. Actuating means according to one of the preceding claims,
characterised by
a slideway (73) in the housing (46) for the rack element (58) on the side of the rack element (58) away from the arrest projection element (74a) of the arrest means (64).

15. Actuating means according to one of the preceding claims,
characterised in that,
a head (58d) of the rack element (58) accommodating a fastening screw (60) for the force-transmission member (28) is guided in a guide (62) fashioned in the housing.

16. Actuating means according to one of the preceding claims,
characterised in that,
the first and second pivot levers (H1, H2) are arranged pivotable on a common pivot bearing pin (56) in the housing (46).

17. Actuating means according to one of the preceding claims,
characterised in that,
the first and second pivot lever (H1, H2) are of two-arm lever configuration, each having a cam-following end and an actuating end acting upon the respective speed-change element (40, 42).

18. Actuating means according to one of the preceding claims,
characterised in that,
the two speed-change elements are comprised of compression rods (40, 42) running parallel to the axis of rotation (17) in the bore (44) and lying side by side transverse to the axis of rotation (17).

19. Actuating means according to claim 18,
characterised in that,
the compression rods (40, 42) are of approximately semicircular cross section with the diameters of the semicircles facing each other.

20. Actuating means according to claim 19,
characterised in that,
the two compression rods (40, 42) are in contact with each other by way of projections (94) running parallel to the axis of rotation (17).

21. Actuating means according to claim 20,
characterised in that,
one of the two compression rods (40, 42) has a projection (94) in the region of the vertex formed between the diameter and the circumference of the cross sectional semicircle, and the other compression rod has a projection (94) in the region of the vertex between the diameter and the circumference of the cross sectional semicircle diametrically opposed the aforesaid projection (94).

22. Actuating means according to one of claims 18 to 21,
characterised in that,
one of the two compression rods (40, 42) is of longer configuration and extends farther into the hub axle (16) than the other compression rod, and in that this compression rod is secured against twisting inside of the hub axle (16).

23. Multispeed cycle shift system comprising a multispeed cycle hub (12) having an actuating means (26) according to one of the preceding claims, a speed-selection means (30) and a force transmission member connecting the actuating means (26) to the speed selection means (30).

## Revendications

1. Dispositif d'actionnement (26) pour un moyeu de bicyclette à plusieurs vitesses (12) avec un axe de moyeu (16) présentant deux extrémités de moyeu et définissant un axe de rotation (17), une enveloppe de moyeu (14) montée tournante sur l'axe de moyeu (16), un engrenage (22) situé à l'intérieur de l'enveloppe de moyeu (14) et qui peut commuter entre plusieurs vitesses, au moins une roue d'entraînement (18) en liaison d'entraînement avec un élément d'entrée (20) de l'engrenage (22), au moins un élément de sortie (24) de l'engrenage (22), qui est en liaison d'entraînement avec l'enveloppe de moyeu (14), un trou (44) prévu dans l'axe de moyeu (16) et s'étendant le long de l'axe de rotation (17), qui reçoit deux éléments de changement de vitesse (40, 42) résistants à la compression et parallèles à l'axe de rotation (17), des extrémités intérieures des éléments de changement de vitesse (40, 42) étant couplées à l'engrenage (22) pour la commutation entre les vitesses et l'extrémité extérieure des éléments de changement de vitesse (40, 42) s'étendant jusqu'à la zone de l'une des deux extrémités de moyeu, le dispositif d'actionnement présentant les éléments suivants :
- un boîtier (46) qui peut être monté sur une extrémité de moyeu (16a),
- une premier disque à came (K1), un deuxième disque à came (K2) ainsi qu'un pignon (54d), qui sont reliés les uns aux autres de façon solidaire en rotation, et qui forment un élément pivotant (54) qui est monté de façon pivotante dans le boîtier (46) autour d'un axe de pivotement (54c),
- un élément allongé formant crémaillère (58) avec un axe longitudinal (58b), qui est monté de manière mobile parallèlement à l'axe longitudinal (58b) dans le boîtier, peut être relié à un dispositif de sélection de vitesse (30) par l'intermédiaire d'un élément de transmission de force (28) et une denture longitudinale (58a) qui s'étend parallèlement à l'axe longitudinal (58b) et se met en prise dans une denture (58a) du pignon (54d),
- un premier levier pivotant et un deuxième levier pivotant (H1, H2), qui sont montés de façon pivotante dans le boîtier (46), le premier levier pivotant (H1) s'appuyant constamment sur le premier disque à came (K1) et le deuxième levier pivotant (H2) s'appuyant constamment sur le deuxième disque à came (K2), afin de réaliser un mouvement de pivotement défini par la forme du disque à came correspondant (K1, K2), et le premier levier pivotant (H1) se mettant en prise sur l'un des deux éléments de changement de vitesse (40, 42) et le deuxième levier pivotant (H2) se mettant en prise sur l'autre élément de changement de vitesse (40, 42) pour le déplacement correspondant de l'élément de changement de vitesse (40, 42) concerné parallèlement à l'axe de rotation (17).

2. Dispositif d'actionnement selon la revendication 1, caractérisé en ce qu'il est prévu un dispositif d'engagement (64) disposé dans le boîtier (46) et coopérant avec l'élément pivotant (54), qui fixe plusieurs positions d'engagement de l'élément pivotant (54) correspondant chacune à une vitesse de l'engrenage (22) commutable.

3. Dispositif d'actionnement selon la revendication 2, caractérisé en ce que le dispositif d'engagement (64) comprend un élément d'engagement en saillie (74) monté dans le boîtier de façon mobile entre une position en prise et une position dégagée et précontraint dans la position de prise au moyen d'un élément à ressort (74b), qui se met en prise avec un profil d'engagement (74c) prévu sur l'élément formant crémaillère (58), le profil d'engagement (74c) présentant plusieurs évidements d'engagement (76) successifs dans le sens de l'axe longitudinal (58b) et associés chacun à une vitesse.

4. Dispositif d'actionnement selon la revendication 1, caractérisé en ce que le boîtier (46) présente deux parties de boîtier (48, 50) reliées entre elles, qui forment un boîtier sensiblement fermé.

5. Dispositif d'actionnement selon la revendication 4, caractérisé en ce que l'une au moins des parties de boîtier (48, 50) est pourvue de moyens pour la fixation d'au moins l'une des parties comprenant l'élément pivotant (54), le premier levier pivotant (H1), le deuxième levier pivotant (H2), l'élément formant crémaillère (58).

6. Dispositif d'actionnement selon la revendication 4 ou 5, caractérisé en ce que les deux parties de boîtier forment chacune une moitié de boîtier (48, 50).

7. Dispositif d'actionnement selon l'une des revendications précédentes, caractérisé en ce que le premier disque à came (K1), le deuxième disque à came (K2) et le pignon (54d) sont montés de façon solidaire en rotation sur un arbre commun.

8. Dispositif d'actionnement selon l'une des revendications précédentes, caractérisé en ce que l'élément formant crémaillère (58) est relié à l'élément de transmission de force (28) par une vis de fixation (60) posée dans l'élément formant crémaillère (58), et en ce que l'élément formant crémaillère (58) est pourvu d'un évidement parallèle à l'axe longitudinal (58b) et s'étendant sensiblement sur toute la longueur de l'élément formant crémaillère (58) pour recevoir une section d'extrémité libre (28a') de l'élément de transmission de force (28) qui se raccorde à la vis de fixation (60).

9. Dispositif d'actionnement selon la revendication 8, caractérisé en ce que dans une réalisation du boîtier à partir de deux parties de boîtier (48, 50) reliées entre elles, l'une des deux parties de boîtier (48, 50) présente une ouverture d'accès (96) pour un outil pouvant être fermée par un élément de fermeture (95) dans la zone de l'élément formant crémaillère (58), afin de permettre un réglage sélectif de la position de fixation de l'élément formant crémaillère (58) sur l'élément de transmission de force (28) au moyen de la vis de fixation (60).

10. Dispositif de fixation selon l'une des revendications précédentes, caractérisé en ce qu'il est prévu dans le boîtier (46) un dispositif à ressort de rappel coopérant avec l'élément pivotant (54) mais actif seulement pour une partie des vitesses (6° et 7° vitesse), qui facilite dans cette partie des vitesses le changement de vitesse dans un sens de changement de vitesse prédéterminé.

11. Dispositif d'actionnement selon la revendication 10, caractérisé en ce que le dispositif à ressort de rappel comprend un ressort (82) allongé monté dans le boitier (46), qui s'appuie par l'une de ses deux extrémités sur l'une des deux parties de boîtier (48, 50) et à l'extrémité duquel l'élément formant crémaillère (58) s'appuie lorsqu'il se trouve dans la position correspondant à chacune des vitesses (6° et 7° vitesses) de la partie des vitesses concernée.

12. Dispositif d'actionnement selon la revendication 11, caractérisé en ce que l'autre extrémité du ressort (82) s'appuie sur un élément de maintien (84) présentant un évidement (84a), et en ce que l'élément formant crémaillère (58) présente une saillie d'entraînement (80) qui peut se déplacer à travers l'évidement (84a) pour entraîner l'autre extrémité du ressort (82).

13. Dispositif d'actionnement selon la revendication 12, caractérisé en ce que lorsque l'élément de transmission de force (28a) est retiré du boîtier pour réaliser un changement de vitesse entre les vitesses de la partie des vitesses concernée (6° et 7° vitesses) du dispositif de sélection de vitesse, un élément à ressort (82) du dispositif à ressort de rappel est de plus en plus comprimé.

14. Dispositif de fixation selon l'une des revendications précédentes, caractérisé en ce qu'il comporte un guidage coulissant (73) dans le boîtier (46) pour l'élément formant crémaillère (58) sur l'élément d'engagement en saillie (74a) du dispositif d'engagement (64), sur le côté de l'élément formant crémaillère (58) faisant face à l'élément d'engagement en saillie (74a) du dispositif d'engagement (64).

15. Dispositif de fixation selon l'une des revendications précédentes, caractérisé en ce qu'une tête (58d) de l'élément formant crémaillère (58) qui reçoit une vis de fixation (60) pour l'élément de transmission de force (28) est guidée dans un guidage (62) formé dans le boîtier.

16. Dispositif de fixation selon l'une des revendications précédentes, caractérisé en ce que le premier levier pivotant et le deuxième levier pivotant (H1, H2) sont montés de manière pivotante dans le boîtier (46) sur un axe de support et de pivotement (56) commun.

17. Dispositif de fixation selon l'une des revendications précédentes, caractérisé en ce que le premier levier pivotant et le deuxième levier pivotant (H1, H2) sont réalisés comme des leviers à deux bras possédant chacun une extrémité qui palpe le disque à came et une extrémité d'actionnement qui se met en prise sur l'élément de changement de vitesse (40, 42) correspondant.

18. Dispositif de fixation selon l'une des revendications précédentes, caractérisé en ce que les deux éléments de changement de vitesse sont formés par des tiges d'appui (40, 42) parallèles à l'axe de rotation dans l'alésage (44) et juxtaposées perpendiculairement à l'axe de rotation (17).

19. Dispositif d'actionnement selon la revendication 18, caractérisé en ce que les tiges d'appui (40, 42) présentent une section approximativement en demi-cercle avec des diamètres de demi-cercle orientés l'un vers l'autre.

20. Dispositif d'actionnement selon la revendication 19, caractérisé en ce que les deux tiges d'appui (40, 42) s'appliquent l'une sur l'autre par des saillies (94) parallèles à l'axe de rotation (17).

21. Dispositif d'actionnement selon la revendication 20, caractérisé en ce que l'une des deux tiges d'appui (40, 42) présente une saillie (94) dans la zone de l'angle formé entre le diamètre du demi-cercle et la circonférence du demi-cercle de la forme en section, et en ce que l'autre tige d'appui présente également une saillie (94) diamétralement opposée à cette saillie (94) dans la zone de l'angle formé entre le diamètre du demi-cercle et la circonférence du demi-cercle de la forme en section.

22. Dispositif d'actionnement selon l'une des revendications 18 à 21, caractérisé en ce que l'une des deux tiges d'appui (40, 42) est plus longue que l'autre et s'étend plus loin dans l'axe de moyeu (16) que l'autre tige de poussée, et en ce que cette tige d'appui est montée de façon à empêcher sa rotation à l'intérieur de l'axe de moyeu (16).

23. Système à plusieurs vitesses pour bicyclette, caractérisé en ce qu'il comprend un moyeu de bicyclette à plusieurs vitesses (12) pourvu d'un dispositif d'actionnement (26) selon l'une des revendications précédentes, un dispositif de sélection des vitesses (30) ainsi qu'un élément de transmission de force qui relie le dispositif d'actionnement (26) au dispositif de sélection des vitesses (30).
